# EUROPÄISCHE PATENTSCHRIFT

(11) **EP 0 535 389 B1**
(45) Veröffentlichungstag und Bekanntmachung des Hinweises auf die Patenterteilung: **22.02.1995**
(21) Anmeldenummer: 92115032.2
(22) Anmeldetag: 03.09.1992
(51) Int. Cl.: B60R 22/18, B60R 22/48

(54) **Mit einem Gurtstraffer verbundenes Gurtschloss**
Belt buckle connected with a belt tensioner
Boucle de ceinture reliée à un tendeur de ceinture

(30) Priorität: 28.09.1991 DE 9112121 U
(43) Veröffentlichungstag der Anmeldung: 07.04.1993
(73) Patentinhaber: Adam Opel Aktiengesellschaft, 65428 Rüsselsheim (DE); General Motors Espana, S.A., Figueruelas (Zaragoza) (ES)
(72) Erfinder: Derichs, Wilfried, Dipl.-Ing., W-6200 Wiesbaden (DE); Quistorf, Dieter H., Dipl.-Ing., W-6085 Nauheim (DE); Kiy, Burghardt P., Dipl.-Ing., W-6090 Rüsselsheim (DE)
(74) Vertreter: Bergerin, Ralf, Dipl.-Ing.

(56) Entgegenhaltungen:
- WO-A-89/00276
- DE-A- 3 620 544
- GB-A- 2 016 263

## Beschreibung

Die Erfindung betrifft ein mit einem Gurtstraffer verbundenes Gurtschloß, welches relativ zu einem Befestigungsteil mittels des Gurtstraffers verschieblich in einem Kraftfahrzeug derart anzuordnen ist, daß das Gurtschloß sich bei einem Unfall aus einer Normallage in eine den Gurt straffende, zurückgezogene, näher zum Befestigungsteil liegende Gurtspannlage bewegt.

Solche mit einem Gurtstraffer verbundene Gurtschlösser nach dem Oberbegriff des Anspruchs 1 sind in letzter Zeit in der Fachliteratur und aus der EP-A-398 010 bekanntgeworden und werden teilweise auch schon in Personenkraftwagen eingebaut. Der Gurtstraffer dient dazu, bei einer starken Verzögerung des Fahrzeugs, zum Beispiel bei einem Unfall, die Gurte derart zu straffen, daß die Gurtlose beseitigt wird und die angegurteten Personen möglichst fest auf den Sitzen gehalten sind. Die Gurtstraffer arbeiten nach unterschiedlichen Prinzipien. Es ist jedoch meist erforderlich, nach einem Gurtstraffvorgang die Gurtstraffer in eine Ausgangsstellung zurückzubewegen oder auszutauschen, so daß sie wieder aktiv werden können. Da das Gurtstraffen nicht immer zuverlässig wahrgenommen werden kann, ist es vorteilhaft, wenn durch eine Anzeige leicht feststellbar ist, ob die Gurtstraffer ausgelöst sind.

Der Erfindung liegt das Problem zugrunde, ein mit einem Gurtstraffer verbundenes Gurtschloß der eingangs genannten Art so auszubilden, daß der Auslösezustand des Gurtstraffers leicht festgestellt werden kann.

Dieses Problem wird erfindungsgemäß dadurch gelöst, daß auf dem Befestigungsteil ein zum Gurtschloß führendes, in Haupterstreckungsrichtung zumindest weitgehend starres, aber seitlich flexibles, bei in Normallage befindlichem Gurtschloß von diesem verdeckten Anzeigeteil angeordnet ist.

Ein solches Anzeigeteil ragt nach einem Gurtstraffen aus dem Gurtschloß hervor. Dadurch ist es zumindest dann leicht wahrnehmbar, wenn man eine Gurtzunge in das Gurtschloß schieben will und deshalb seinen Blick auf das Gurtschloß richtet. Das erfindungsgemäße Anzeigeteil kann deshalb weniger leicht übersehen werden als beispielsweise ein an am Gurtstraffer angeordnetes Anzeigeteil, da der Gurtstraffer meist relativ versteckt angeordnet ist und man zum Erkennen der Anzeige seinen Blick dorthin wenden müßte, während man ihn beim Angurten meist ohnehin zum Gurtschloß richtet. Durch die Anordnung des Anzeigeteiles auf dem Befestigungsteil kommt es auf sehr einfache Weise zu einer Anzeige, wenn sich das Gurtschloß durch die Wirkung des Gurtstraffers relativ zum Befestigungsteil und damit auch zum Anzeigeteil verschiebt.

Das Anzeigeteil ist bei nicht ausgelöstem Gurtstraffer völlig unsichtbar und vor Verschmutzung und Beschädigung geschützt, wenn gemäß einer vorteilhaften Ausgestaltung der Erfindung das Anzeigeteil innerhalb des Gurtschlosses und eines von diesem zum Befestigungsteil führenden Faltenbalges angeordnet und im Gurtschloß ein zu seiner Stirnseite hin offener Schlitz zum Austritt des vorderen Bereiches des Anzeigeteils aus dem Gurtschloß bei einer Rückbewegung des Gurtschlosses vorgesehen ist.

Das Anzeigeteil ist besonders kostengünstig herstellbar, wenn es aus einem sich am Befestigungsteil abstützenden Schaft und einem von diesem gehaltenen, bis zum Schlitz reichenden Anzeigeblatt besteht.

Das Anzeigeteil vermag neben seiner Funktion der Anzeige des ausgelösten Gurtstraffers zusätzlich eine Führungsfunktion für das vom Gurtstraffer zum Gurtschloß führende Seil oder die Seile auszuüben, wenn gemäß einer anderen Weiterbildung der Erfindung der Schaft einen in Längsrichtung des Schaftes verlaufenden Führungskanal oder zwei Führungskanäle zum Führen eines vom Gurtstraffer zum Gurtschloß führenden Seiles oder zweier solcher Seile aufweist.

Da das Gurtschloß in einer in Fahrzeuglängsrichtung verlaufenden Ebene begrenzt schwenkbar gehalten sein muß, ist es erforderlich, daß auch das Anzeigeteil sich biegen kann. Dies läßt sich besonders leicht erreichen, wenn der Schaft eine Vielzahl von quer zu seiner Haupterstreckungsrichtung und in der Ebene des Gurtschlosses in ihn von beiden Seiten her hineinführende Schlitze aufweist.

Die Festigkeit des Schaftes wird durch die Schlitze nicht unerwünscht stark herabgesetzt, wenn gemäß einer anderen Weiterbildung der Erfindung die Bereiche oberhalb und unterhalb jedes Schlitzes jeweils durch einen u-förmig verlaufenden, dünnwandigen Kunststoffsteg miteinander verbunden sind. Die u-förmigen Kunststoffstege vermögen zusätzlich den Faltenbalg zu stützen.

Die Verbindung des Anzeigeteiles mit dem Befestigungsteil kann ohne Schrauben durch eine einfache Rastverbindung erfolgen, indem an zwei gegenüberliegenden Seiten des dem Befestigungsteil zugewandten Endes des Schaftes jeweils ein widerhakenartiger Rastvorsprung angeformt ist und das Befestigungsteil zur Halterung des Anzeigeteiles einen u-förmigen Haltebereich hat, welcher in zwei parallellaufenden Schenkeln jeweils eine Ausnehmung zur Aufnahme jeweils eines Rastvorsprunges aufweist.

Die Erfindung läßt zahlreiche Ausführungsformen zu. Zur weiteren Verdeutlichung ihres Grundprinzips ist eine davon in der Zeichnung dargestellt und wird nachfolgend beschrieben.

Diese zeigt in:
- Fig.1: eine perspektivische, teilweise geschnitten dargestellte Ansicht eines Teilbereiches eines Kraftfahrzeugsitzes mit dem erfindungsgemäßen Gurtschloß,
- Fig.2: eine perspektivische Ansicht des Gurtschlosses und des zugeordneten Gurtstraffers,
- Fig.3: eine Seitenansicht eines Anzeigeteiles des Gurtschlosses,
- Fig.4: eine Vorderansicht des Anzeigeteiles.

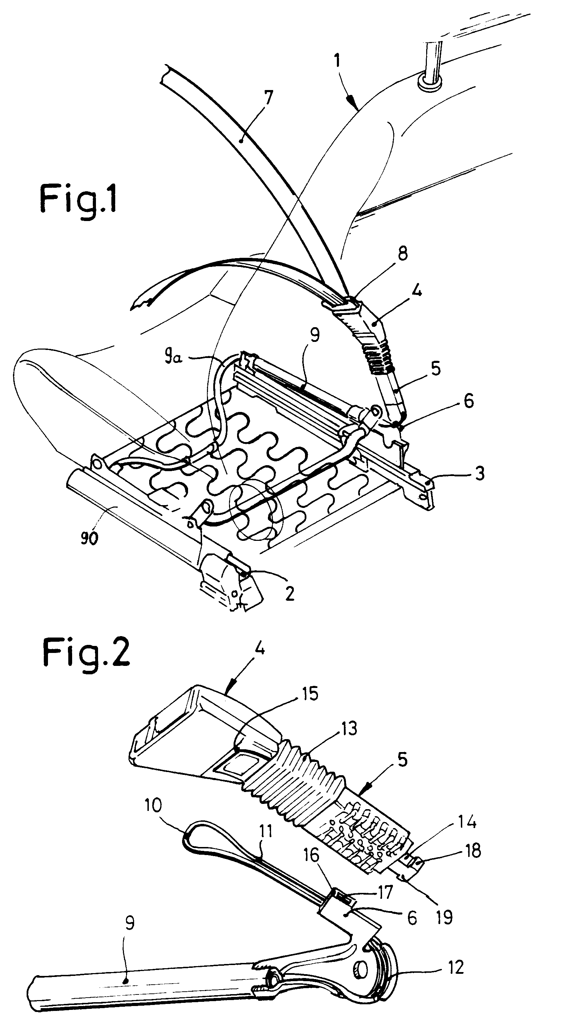

Die Figur 1 zeigt einen linken, vorderen Fahrzeugsitz 1, welcher in Unterschienen 2, 3 längsverstellbar geführt ist. An der rechten Seite des Fahrzeugsitzes 1 ist ein Gurtschloß 4 mit Bremsrohr 9 angeordnet, welches von einer Gurtpeitsche 5 gehalten ist, die an einem am Fahrzeugsitz 1 angebrachten Befestigungsteil 6 befestigt ist. Ein Gurtband 7 einer nicht näher dargestellten Dreipunktsicherheitsgurtanordnung hat eine übliche Schloßzunge 8, welche beim Angurten in das Gurtschloß 4 geschoben wird.

Seitlich neben dem Fahrzeugsitz ist auf seiner linken Seite ein Gurtstraffer 90 mit eingebautem Sensor karosserieseitig angeordnet, der bei einer starken Verzögerung das Gurtschloß 4 über einen Bowdenzug 9 a in Richtung des Befestigungsteiles 6 bewegt und dadurch das Gurtband 7 strafft.

Die Figur 2 zeigt das gurtschloßseitige Ende des Gurtstraffers 90. Von ihm aus führt ein am Ende eine Schlaufe 10 bildendes Seil 11 über eine am Ende des Bremsrohres 9 angebrachte Umlenkung 12 zum Gurtschloß 4, in welchem die Schlaufe 10 fest mit dem Gurtschloß 4 verbunden ist. Die Umlenkung 12 führt zum Befestigungsteil 6. Das Bremsrohr 9 des Gurtstraffers 90 bildet deshalb mit der Umlenkung 12 und dem Befestigungsteil 6 eine Einheit. Die Gurtpeitsche 5, welche von diesem Seil 11 gebildet ist, wird von einem Faltenbalg 13 abgedeckt.

Im Inneren des Faltenbalges 13 ist ein Anzeigeteil 14 angeordnet, welches vom Befestigungsteil 6 bis in das Gurtschloß 4 hinein führt und unmittelbar vor einem Schlitz 15 des Gurtschlosses 4 endet.

In der Figur 2 ist weiterhin zu sehen, daß das Befestigungsteil 6 einen u-förmigen Haltebereich 16 hat, der in seinen parallel verlaufenden Schenkeln jeweils eine rechteckige Ausnehmung 17 aufweist. In diese Ausnehmungen 17 vermag das Anzeigeteil 14 mit widerhakenartigen Rastvorsprüngen 18, 19 zu rasten.

Kommt es zu einer starken Fahrzeugverzögerung, dann zieht der Gurtstraffer 90 das Seil 11 weiter in den Gurtstraffer hinein. Dadurch bewegt sich das Gurtschloß 4 in Richtung des Befestigungsteiles 6. Da das Anzeigeteil 14 in Haupterstreckungsrichtung nicht verformbar ist, tritt es bei einer solchen Verschiebung des Gurtschlosses 4 mit seinem oberen Bereich aus dem Schlitz 15 aus und wird durch Aktivierung des Bremsrohres 9 in dieser Stellung gehalten, so daß es spätestens beim erneuten Anlegen des Gurtes 7 gesehen wird.

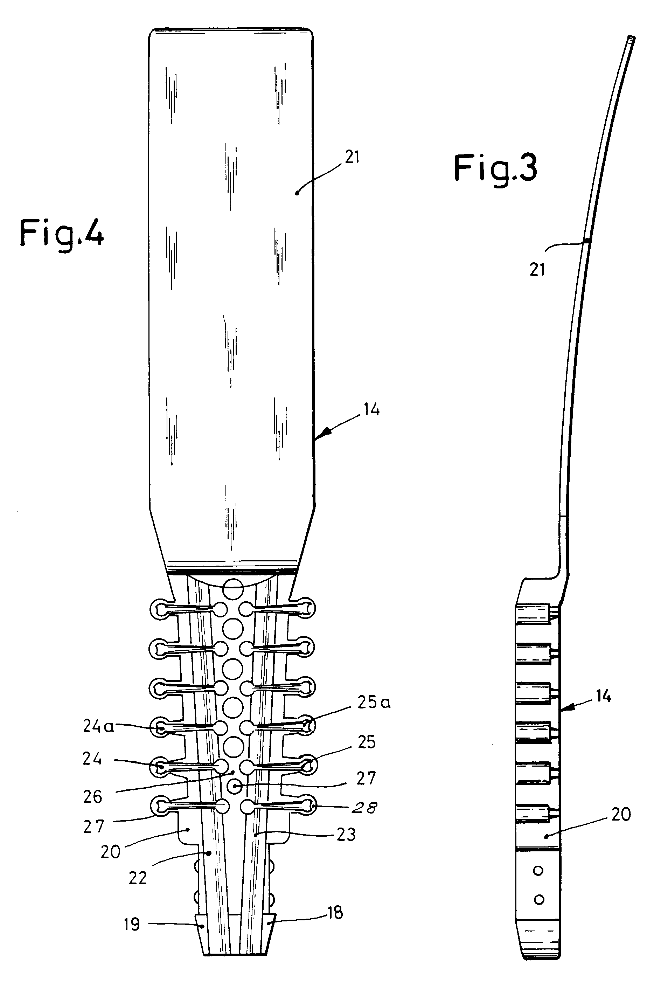

Die Figuren 3 und 4 verdeutlichen die Gestaltung des Anzeigeteils 14. Dieses besteht im wesentlichen aus einem mit seinem unteren Ende am Befestigungsteil 6 zu befestigenden Schaft 20 und einem sich daran nach oben hin anschließenden, bis zum Schlitz 15 führenden Anzeigeblatt 21.

Wie die Figur 4 zeigt, sind im Schaft 20 nebeneinander zwei rinnenförmige Führungskanäle 22, 23 versehen, in welchen das in Figur 2 gezeigte Seil 11 verläuft. Quer zum Schaft 20 führen von zwei gegenüberliegenden Seiten her in diesen eine Vielzahl von Schlitzen 24, 25 oder 24a, 25a hinein, so daß zwischen den Enden der Schlitze 24, 25 nur ein Schaftkern 26 erhalten bleibt, in dem übereinander durchgehende Löcher 27 vorgesehen sind. Die Schlitze 24, 25 sind nach außen hin dadurch geschlossen, daß ein dünner, u-förmig verlaufender Kunststoffsteg 28 jeweils die Bereiche oberhalb und unterhalb jedes Schlitzes 24, 25 miteinander verbindet.

Die bei der Erläuterung der Figur 2 zu sehenden Rastvorsprünge 18, 19 des unteren Endes des Schaftes 20 sind in Figur 4 ebenfalls dargestellt und positioniert.

## Patentansprüche

1. Mit einem Gurtstraffer (90) verbundenes Gurtschloß (4), welches relativ zu einem Befestigungsteil (6) mittels des Gurtstraffers (90) verschieblich in einem Kraftfahrzeug derart angeordnet ist, daß das Gurtschloß (4) sich bei einem Unfall aus einer Normallage in eine den Gurt straffende, zurückgezogene, näher zum Befestigungsteil (6) liegende Gurtspannlage bewegt, **dadurch gekennzeichnet**, daß auf dem Befestigungsteil (6) ein zum Gurtschloß (4) führendes, in Haupterstreckungsrichtung zumindest weitgehend starres, bei in Normallage befindlichem Gurtschloß (4) von diesem verdecktes Anzeigeteil (14) angeordnet ist.

2. Gurtschloß nach Anspruch 1, **dadurch gekennzeichnet**, daß das Anzeigeteil (14) innerhalb des Gurtschlosses (4) und eines von diesem zum Befestigungsteil (6) führenden Faltenbalges (13) angeordnet und im Gurtschloß (4) ein zu seiner Stirnseite hin offener Schlitz (15) zum Austritt des vorderen Bereiches des Anzeigeteils (14) aus dem Gurtschloß (4) bei einer Rückbewegung des Gurtschlosses (4) vorgesehen ist.

3. Gurtschloß nach den Ansprüchen 1 oder 2, **dadurch gekennzeichnet**, daß das Anzeigeteil (14) aus einem sich am Befestigungsteil (6) abstützenden Schaft (20) und einem von diesem gehaltenen, bis zum Schlitz (15) reichenden Anzeigeblatt (21) besteht.

4. Gurtschloß nach Anspruch 3, **dadurch gekennzeichnet**, daß der Schaft (20) einen in Längsrichtung des Schaftes (20) verlaufenden Führungskanal (22, 23) oder zwei Führungskanäle (22, 23) zum Führen eines vom Gurtstraffer (90) zum Gurtschloß (4) führenden Seiles (11) oder zweier solcher Seile (11) aufweist.

5. Gurtschloß nach zumindest einem der vorangehenden Ansprüche, **dadurch gekennzeichnet**, daß der Schaft (20) eine Vielzahl von quer zu seiner Haupterstreckungsrichtung und in der Ebene des Gurtschlosses (4) in ihn von beiden Seiten her hineinführende Schlitze (24, 25) aufweist.

6. Gurtschloß nach Anspruch 5, **dadurch gekennzeichnet**, daß die Bereiche oberhalb und unterhalb jedes Schlitzes (24, 25) jeweils durch einen u-förmig verlaufenden, dünnwandigen Kunststoffsteg (28) miteinander verbunden sind.

7. Gurtschloß nach zumindest einem der vorangehenden Ansprüche, **dadurch gekennzeichnet**, daß an zwei gegenüberliegenden Seiten des dem Befestigungsteil (6) zugewandten Endes des Schaftes (20) jeweils ein widerhakenartiger Rastvorsprung (18, 19) angeformt ist und das Befestigungsteil (6) zur Halterung des Anzeigeteiles (14) einen u-förmigen Haltebereich (16) hat, welcher in zwei parallellaufenden Schenkeln jeweils eine Ausnehmung (17) zur Aufnahme jeweils eines Rastvorsprunges (18, 19) aufweist.

## Claims

1. Belt lock (4), connected to a belt tightener (90), which in a motor vehicle is displaceably arranged relative to a securing part (6) by means of a belt tightener (90) in such a way that in an accident the belt lock (4) moves from a normal position to a belt tightening position drawn back closer to the securing part (6), **characterised** in that on the securing part (6) is arranged an indicator part (14), leading to the belt lock (4), which is substantially rigid at least in the main stretching direction, and which is covered by the belt lock (4) when this is located in the normal position.

2. Belt lock according to claim 1, **characterised** in that the indicator part (14) is arranged within the belt lock (4) and within a bellows (13) leading from the belt lock (4) to the securing part (6) and in the belt lock (4) there is provided a slot (15), open towards its front end, for the discharge of the front region of the indicator part (14) from the belt lock (4) when the belt lock (4) is drawn back.

3. Belt lock according to the claims 1 or 2, **characterised** in that the indicator part (14) consists of a shaft (20) supported by the securing part (6) and an indicator strip (21), supported by the shaft (20), which extends to the slot (15).

4. Belt lock according to claim 3, **characterised** in that the shaft (20) has a guide channel (22, 23) running in the longitudinal direction of the shaft (20) or two guide channels (22, 23) for guiding one cable (11) or two such cables (11) leading from the belt tightener (90) to the belt lock (4).

5. Belt lock according to at least one of the preceding claims, **characterised** in that the shaft (20) has a plurality of slots (24, 25) leading from both sides into the belt lock (4) in the plane of the belt lock (4) and transverse to the main stretching direction of the shaft (20).

6. Belt lock according to claim 5, **characterised** in that the regions above and below each slot (24, 25) are connected together in each case by a U-shaped, thin-walled plastic web (28).

7. Belt lock according to at least one of the preceding claims, **characterised** in that on two oppositely arranged sides of the end of the shaft (20) facing the securing part (6) there is formed in each case a barb-like snap-in projection (18, 19) and the securing part (6) has a U-shaped retaining area (16), for holding the indicator part (14), which has a recess (17) in each of the two parallel running arms for receiving a snap-in projection (18, 19) respectively.

## Revendications

1. Dispositif d'accouplement (4) de ceinture de sécurité lié à un tendeur (90) de ceinture de sécurité, lequel dispositif est monté dans un véhicule automobile par l'intermédiaire du tendeur de ceinture (90) avec possibilité de déplacement par rapport à un élément de fixation (6) de manière telle que lors d'un accident le dispositif d'accouplement (4) soit déplacé d'une position normale vers une position rétractée, plus proche de l'élément de fixation (6), dans laquelle la ceinture de sécurité est tendue, caractérisé par le fait qu'un élément indicateur (14) menant au dispositif d'accouplement (4), au moins suffisamment rigide dans la direction de sa dimension principale est disposé sur l'élément de fixation (6) et est couvert par le dispositif d'accouplement (4) lorsque celui-ci se trouve dans sa position normale.

2. Dispositif d'accouplement selon la revendication 1, caractérisé par le fait que l'élément indicateur (14) est disposé à l'intérieur du dispositif d'accouplement (4) et d'un soufflet (13) qui s'étend entre ledit dispositif d'accouplement et l'élément de fixation (6) et qu'il est prévu dans le dispositif d'accouplement (4) une fente (15) ouverte en direction de la face frontale de celui-ci destinée à permettre la sortie de la partie antérieure de l'élément indicateur (14) hors du dispositif d'accouplement (4) lors d'un déplacement dudit dispositif d'accouplement (4).

3. Dispositif d'accouplement selon la revendication 1 ou la revendication 2, caractérisé par le fait que l'élément indicateur (14) se compose d'une tige (20) qui prend appui sur l'élément de fixation (6) et d'une languette (21) indicatrice qui est supportée par ladite tige et s'étend jusqu'à la fente (15).

4. Dispositif d'accouplement selon la revendication 3, caractérisé par le fait que la tige (20) comporte un canal de guidage (22, 23) qui s'étend dans la direction longitudinale de ladite tige (20) ou deux canaux de guidage (22, 23) destinés au guidage d'un câble (11) ou de deux câbles (11) qui mènent du tendeur de ceinture (90) au dispositif d'accouplement (4).

5. Dispositif d'accouplement selon au moins une des revendications précédentes, caractérisé par le fait que la tige (20) comporte une pluralité de fentes (24, 25) qui s'étendent des deux côtés en direction de l'intérieur de la tige, transversalement à la direction de la dimension principale de celle-ci et dans le plan du dispositif d'accouplement (4).

6. Dispositif d'accouplement selon la revendication 5, caractérisé par le fait que les parties situées au-dessus et en-dessous de chaque fente (24, 25) sont reliées entre elles chaque fois par un cordon (28) de matière plastique en forme de U à faible épaisseur de paroi.

7. Dispositif d'accouplement selon au moins une des revendications précédentes, caractérisé par le fait qu'il est prévu sur deux côtés en vis-à-vis de l'extrémité de la tige (20) tournée vers l'élément de fixation (6) une saillie d'encliquetage (18, 19) en forme de crochet et par le fait que l'élément de fixation (6) comporte une partie de fixation (16) en forme de U pour tenir l'élément indicateur (14), qui présente, dans deux bras parallèles, un évidement (17) destiné à recevoir chaque fois une saillie d'encliquetage (18, 19).
